# EUROPÄISCHE PATENTSCHRIFT

(11) **EP 0 454 697 B1**
(45) Veröffentlichungstag und Bekanntmachung des Hinweises auf die Patenterteilung: **31.03.1993**
(21) Anmeldenummer: 90901559.6
(22) Anmeldetag: 12.01.1990
(51) Int. Cl.: H02P 7/622, H02M 1/084

(54) **VORRICHTUNG ZUR STEUERUNG VON DREHSTROMSTELLERN**
DEVICE FOR CONTROLLING ANTIDUCTORS
DISPOSITIF DE COMMANDE D'ORGANES EXECUTIFS EN COURANT TRIPHASE

(30) Priorität: 23.01.1989 EP 89101150
(43) Veröffentlichungstag der Anmeldung: 06.11.1991
(73) Patentinhaber: SIEMENS AKTIENGESELLSCHAFT, 80333 München (DE)
(72) Erfinder: RUNGGALDIER, Diethard, D-8602 Stegaurach (DE); DOERWALD, Claus, B., D-8552 Höchstadt (DE)
(86) Internationale Anmeldenummer: DE9000014
(87) Internationale Veröffentlichungsnummer: WO9008424

(56) Entgegenhaltungen:
- EP-A- 248 448
- GB-A- 2 084 359
- US-A- 4 468 726

## Beschreibung

Die Erfindung bezieht sich auf eine Vorrichtung zur Steuerung von Drehstromstellern durch Phasenanschnittsteuerung von Halbleiter-Ventilen.

Zur Regelung der in einem Drehstromnetz einer elektrischen Last zugeführten Leistung werden Drehstromsteller verwendet, die durch Phasenanschnittsteuerung von Halbleiter-Ventilen gesteuert werden. Insbesondere beim Betrieb eines Drehstrommotors erfordern wechselnde Betriebsbedingungen, wie z.B. unterschiedliche Belastungen des Motors während Start- oder Verzögerungsphasen beim Ein-und Ausschalten eine Regelung der dem Motor zugeführten Leistung um das Netz, den Motor und den Antrieb vor unnötigen Belastungen zu schützen.

Aus der britischen Patentschrift GB-A-2 084 359 ist eine Vorrichtung zur Steuerung eines Drehstromstellers für einen Asynchron-Drehstrommotor bekannt, bei der ein beispielsweise durch Unterbelastung des Motors hervorgerufener ungünstiger Leistungsfaktor verbessert werden soll. Dazu sind dem Motor für jede Versorgungsphase steuerbare Halbleiter-Ventile, insbesondere ein Triac oder eine antiparallele Thyristorschaltung, zugeordnet, die über Phasenanschnittsteuerung eine von den aktuellen Betriebsbedingungen des Motors abhängige Leistungszufuhr ermäglichen. Eine Verbesserung des Leistungsfaktors wird bei dieser bekannten Vorrichtung dadurch erreicht, daß in einer Steuereinrichtung der Phasenunterschied zwischen Strom und Spannung für jede Phase detektiert und durch eine entsprechende Vergrößerung des Zündwinkels, d.h. des Zeitraums, der zwischen dem Stromnulldurchgang und dem Zündzeitpunkt für die jeweilige Phase verstreicht, verringert wird. Als Zeitreferenz für die Ermittlung des Zündzeitpunkts wird bei der bekannten Vorrichtung der Zeitpunkt des Stromnulldurchganges verwendet, der durch Messung der über dem Triac anliegenden Spannung ermittelt wird. Diese Spannung wird einem Komparator zugeleitet, dessen Ausgangszustände den Schaltzuständen dieses Triacs entsprechen. Der Stromnulldurchgang korrespondiert dann zu einer Flanke des Ausgangssignals des Komparators, aus der mit Hilfe eines Monoflops ein Abtastimpuls für eine mit dem Nulldurchgang der Versorgungsspannung synchronisierte Rampenspannung erzeugt wird. Der abgetastete Wert der Rampenspannung wird von einer extern über ein Potentiometer eingegebenen Referenzspannung subtrahiert und auf den invertierenden Eingang eines Differenzverstärkers gegeben, dessen Ausgangsspannung zusammen mit der Rampenspannung einem weiteren Komparator zugeführt wird, der über einen nachgeschalteten Triggerpulsgenerator ein primäres Zündsignal erzeugt, wenn die Rampenspannung die Ausgangsspannung des Differenzverstärkers überschreitet. Durch diese Schaltung wird somit die Phasenverschiebung zwischen Motorstrom und Motorspannung und somit der Leistungsfaktor auf einen Wert stabilisiert, der durch die am Potentiometer eingestellte Referenzspannung gegeben ist.

Bei Drehstrommotoren, die ohne Nulleiter beispielsweise in Stern- oder Dreieckschaltung betrieben werden, muß bei einer Phasenanschnittsteuerung jedoch darauf geachtet werden, daß stets wenigstens zwei Phasen gleichzeitig leitend sind. Bei Zündwinkeln, die gemessen vom Stromnulldurchgang 60° überschreiten, ist es nur dann der Fall, wenn neben der die Zündung auslösende Phase noch eine zweite Phase gezündet wird. Diese zweite Phase wird dabei bestimmt durch den Drehsinn der Wechselspannung und die zündungsauslösende Phase.

Bei der bekannten Vorrichtung wird dies durch einen Logikschaltkreis aus sechs UND-Gattern realisiert, von denen jeweils zwei der Steuereinrichtung einer Phase zugeordnet sind. Mittels eines Drehrichtungsdetektors wird je nach Drehsinn der Wechselspannung ein binäres Signal auf eine von zwei Ausgangsleitungen des Drehrichtungsdetektors gelegt. Diese Ausgangsleitungen sind jeweils gemeinsam mit der Ausgangsleitung für das primäre Zündsignal der auslösenden Phase auf unterschiedliche UND-Gatter gelegt, deren Ausgänge jeweils das Gate eines der beiden arideren Triacs mit sekundären Zündsignalen versorgt.

Der Erfindung liegt nun die Aufgabe zugrunde, eine Vorrichtung zur Steuerung von Drehstromstellern anzugeben, die eine einfache Realisierung einer in zwei Phasen gleichzeitigen Zündung ermöglicht und die außerdem eine flexible Anpassung an unterschiedliche Betriebsarten der Vorrichtung erlaubt.

Die genannte Aufgabe wird erfindungsgemäß gelöst mit den Merkmalen des Anspruches 1. Durch die Verwendung eines Festwertspeichers (ROM), vorzugsweise eines programmierbaren Festwertspeichers (PROM), wird eine flexible Anpassung der Vorrichtung an unterschiedliche Betriebsbedingungen des Motors ermöglicht. Insbesondere können unterschiedliche Zündverfahren in einem einzigen, leicht austauschbaren Festwertspeicher realisiert werden, da dort die gesamte hierzu erforderliche Logik untergebracht werden kann. So können beispielsweise Einphasenzündung und Doppelphasenzündung für beide Drehrichtungen des Drehfeldes mit einem Baustein realisiert werden. Außerdem können unterschiedliche Betriebszustände, wie Sperre und Dauerzündung, auf einfache Weise erzeugt werden und die Polarität der Eingangs- und Ausgangssignale ist entsprechend den Erfordernissen frei wählbar. Durch die Verwendung eines Festwertspeichers ist außerdem bei der Doppelphasenzündung gewährleistet, daß die für die gleichzeitig zu zündenden Phasen erzeugten sekundären Zündsignale untereinander praktisch nicht verzögert sind. Dies ist jedoch für eine störungsfreie Steuerung induktiver Lasten erforderlich. Würden die sekundären Zündsignale beispielsweise in einem Mikroprozessor im Rahmen eines Programms erzeugt werden, so wäre eine Zeitverzögerung zwischen den beiden Zündsignalen aufgrund der endlichen Rechengeschwindiugkeit des Prozessors unvermeidlich. Diese Zeitverzögerung kann dabei eine Größenordnung erreichen, die eine Steuerung induktiver Lasten unmöglich macht.

Weitere vorteilhafte Ausgestaltungen der Erfindung ergeben sich gemäß der Unteransprüche.

Zur weiteren Erläuterung der Erfindung wird auf die Zeichnung verwiesen, in deren
- Figur 1: eine Vorrichtung gemäß der Erfindung in einem Blockschaltbild veranschaulicht ist. Gemäß
- Figur 2: ist der Speicherinhalt eines in der Vorrichtung verwendeten ROM in einer Tabelle dargestellt. In
- Figuren 3 bis 7: sind die für den Zündvorgang verwendeten elektrischen Signale jeweils in einem Diagramm gegen die Zeit aufgetragen.
- Figur 8: zeigt eine weitere vorteilhafte Ausführungsform der Erfindung in einem Blockschaltbild. In
- Figuren 9 bis 13: ist der zeitliche Ablauf der zu dieser Ausführungsform gehörenden Steuersignale veranschaulicht und in
- Figuren 14 bis 16: sind weitere bevorzugte Ausgestaltungen der Erfindung ebenfalls jeweils in einem Blockschaltbild dargestellt.

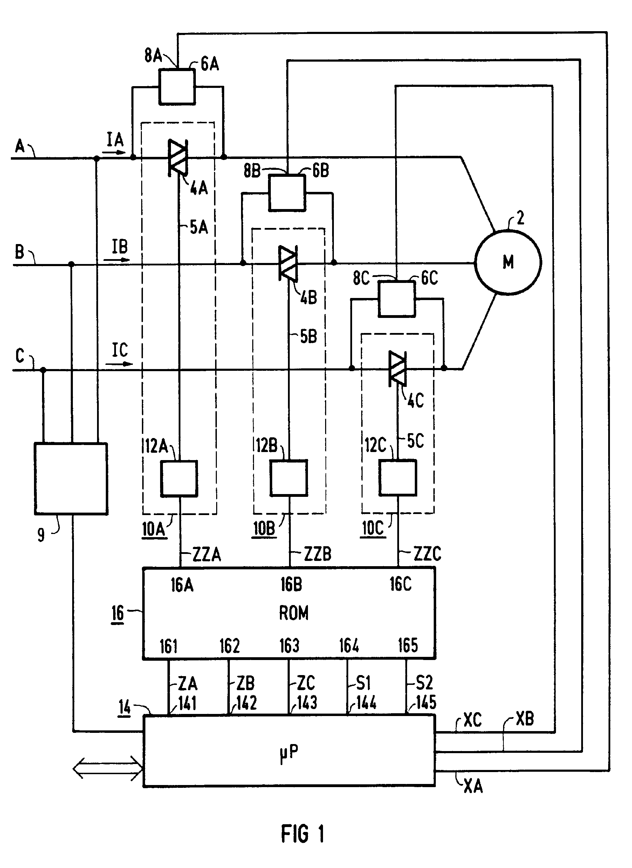

Entsprechend Figur 1 ist eine Last, beispielsweise ein Motor 2 jeweils über ein Halbleiter-Ventil 4A, 4B bzw. 4C, beispielsweise ein Triac oder eine Thyristorschaltung, an die drei Phasen A, B und C eines Drehstromnetzes angeschlossen. Die Halbleiter-Ventile 4A, 4B und 4C sind jeweils mit Steuerelektroden 5A, 5B bzw. 5C versehen und jeweils Teil einer Zündeinrichtung 10A, 10B bzw. 10C, die jeweils die für die Halbleiterventile 4A, 4B und 4C erforderlichen Zündverstärker 12A, 12B bzw. 12C enthält. Anstelle elektrisch gezündeter Halbleiter-Ventile 4A, 4B und 4C können auch optisch gezündete Halbleiter-Ventile vorgesehen sein.

Die Steuerung der Halbleiter-Ventile 4A, 4B und 4C erfolgt durch Phasenanschnitt- oder Zündeinsatzsteuerung. An die Steuerelektroden 5A, 5B bzw. 5C werden hierzu jeweils in Abhängigkeit von der Phasenlage Steuerimpulse angelegt, die eine Zündung des betreffenden Halbleiter-Ventils 4A, 4B bzw. 4C hervorrufen.

Den Halbleiter-Ventilen 4A, 4B und 4C ist in der bevorzugten Ausführungsform gemäß der Figur jeweils ein Referenz-Detektor 6A, 6B bzw. 6C zugeordnet, mit dem jeweils eine Kenngröße des zeitlichen Verlaufes des in den Phasen A, B und C fließenden Stromes IA, IB bzw. IC über den Spannungsabfall an den Halbleiter-Ventilen 4A, 4B bzw. 4C erfaßt wird. Diese Kenngröße dient zur Festlegung einer Zeitreferenz für die Phasenanschnittsteuerung, die als Referenzsignal XA, XB und XC jeweils an den Ausgängen 8A, 8B bzw. 8C der Referenz-Detektoren 6A, 6B bzw. 6C bereitgestellt wird. Als Kenngröße sind beispielsweise das Maximum und Minimum im zeitlichen Verlauf des Stromes, vorzugsweise der Stromnulldurchgang, geeignet. In einer bevorzugten Ausführungsform enthalten die Referenz-Detektoren 6A, 6B und 6C beispielsweise jeweils einen Komparator, der den Absolutwert dieses Spannungsabfalles mit einem vorgegebenen Schwellwert vergleicht. An den Ausgängen 8A, 8B und 8C steht somit jeweils ein Referenzsignal XA, XB bzw. XC mit zwei Pegeln an. Mit dem einen Pegel wird dabei ein Zustand erfaßt, der zu einem in der jeweiligen Phase fließenden Strom gehört, der kleiner ist als ein dem Schwellwert zugehöriger Grenzwert. Bei entsprechend niedriger Wahl dieses Schwellwertes, beispielsweise etwa 10 V, entspricht dann dieser Pegel im wesentlichen Strom Null und die Ausgangssignale XA, XB und XC geben im wesentlichen die Schaltzustände der betreffenden Halbleiter-Ventile 4A, 4B bzw. 4C wieder. Die Flanken zwischen diesen beiden Schaltzuständen fallen dann wenigstens annähernd zeitlich mit den Stromnulldurchgängen des durch die Halbleiter-Ventile 4A, 4B und 4C jeweils fließenden Stromes IA, IB bzw. IC zusammen.

Die Ausgänge 8A, 8B und 8C der Referenz-Detektoren 6A, 6B bzw. 6C sind mit einer Steuereinrichtung 14, beispielsweise einem Mikroprozessor, verbunden, die aus den Referenzsignalen XA, XB und XC entsprechend einem vorgegebenen Zündwinkel zeitverzögerte primäre Zündsignale ZA, ZB und ZC ableitet und an jeweils einer Phase A, B bzw. C zugeordneten Steuerausgängen 141, 142 bzw. 143 bereitstellt. Eine interne Logik in der Steuereinrichtung sorgt dafür, daß die beiden hohen Zündwinkel von den durch das Löschen einer Phase hervorgerufenen Stromlücken abgeleiteten Referenzsignale ignoriert und nicht zum Ableiten primärer Zündsignale herangezogen werden. Für ohmsche Lasten ist es beispielsweise in einer vereinfachten Ausführungsform der Erfindung ausreichend, wenn nur einer einzigen Phase, beispielsweise der Phase A, ein Referenz-Detektor 6A zugeordnet ist. Die primären Zündsignale ZB und ZC für die anderen Phasen B und C können dann in der Steuereinheit 14 durch einen konstanten, einer Phasenverschiebung von 120° bzw. 240° entsprechenden Zeitversatz aus dem vom Referenzsignal XA abgeleiteten primären Zündsignal ZA erzeugt werden.

Der Zündwinkel wird von der Steuereinrichtung 14 im Rahmen eines beispielsweise extern anwählbaren Steuerprogramms sowie extern eingebbarer Motorparameter bestimmt. Der Zündwinkel kann auch durch ein intern in der Steuereinrichtung 14 ablaufendes Programm zeitabhängig sein. So wird beispielsweise durch einen zeitabhängigen Zündwinkel, der sich ausgehend von einem vorgegebenen Anfangswert bis auf einen Minimalwert reduziert, ein Sanftstart des Motors 2 ermöglicht.

Zusätzlich werden von der Steuereinrichtung 14 auf weiteren Steuerausgängen 144 und 145 noch binäre Steuersignale S1 und S2 zur Verfügung gestellt, die entsprechend ihren Pegeln Betriebsarten der Steuerung sowie den Drehsinn des Drehstromes anzeigen. Für die Ermittlung dieses Drehsinns kann gemäß dem Beispiel der Figur ein Drehrichtungs-Detektor 9 vorgesehen, der ein entsprechend dem Drehsinn binär codiertes Ausgangssignal an die Steuereinrichtung 14 weiterleitet. Die Steuerausgänge 141 bis 145 sind an die Steuereingänge 161 bis 165 eines Festwertspeichers 16, vorzugsweise ein programmierbarer Festwertspeicher (PROM), insbesondere ein EPROM oder ein EEPRDM, angeschlossen. Die an den Steuereingängen 161 bis 165 anstehenden primären Zündsignale ZA, ZB und ZC sowie die Steuersignale S1 und S2 werden entsprechend einer im Festwertspeicher 16 programmierten Tabelle verarbeitet. An den Datenausgängen 16A, 16B und 16C des Festwertspeichers 16 stehen die entsprechend dieser vorgegebenen Tabelle für die drei Phasen ermittelten sekundären Zündsignale ZZA, ZZB bzw. ZZC in Form eines binären Datenwortes an. Die Datenausgänge 16A, 16B und 16C sind jeweils mit einer Zündeinrichtung 10A, 10B bzw. 10C verbunden, in denen die sekundären Zündsignale ZZA, ZZB und ZZC verstärkt und galvanisch getrennt zum schaltbaren Halbleiter-Ventil 4A, 4B bzw. 4C weitergeleitet werden.

In einer bevorzugten Ausführungsform der Erfindung werden die Referenzsignale XA, XB und XC der Detektoren 6A, 6B bzw. 6C bei stehendem oder entmagnetisiertem Motor 2, d.h. bei sperrenden Halbleiter-Ventilen 4A, 4B und 4C, zur Bestimmung des Drehsinns des Drehfeldes herangezogen. Bei sperrenden Halbleiter-Ventilen 4A, 4B und 4C und angeschlossener Last liegt nämlich die Phasenspannung über den Halbleiter-Ventilen 4A, 4B und 4C an und die aus diesen Spannungsabfällen erzeugten Referenzsignale XA, XB, XC, beinhalten in ihrer zeitlichen Reihenfolge untereinander den Drehsinn des Drehfeldes. Wird beispielsweise in den Referenz-Detektoren 6A, 6B und 6C jeweils eine Komparatorschaltung verwendet, so werden auch bei Strom Null Referenzsignale XA, XB bzw. XC mit jeweils zwei Pegeln erzeugt, von denen einer den Spannungsnulldurchgang der betreffenden Phase anzeigt. Aus der zeitlichen Reihenfolge dieser Pegel für die verschiedenen Phasen kann dann der Drehsinn ermittelt werden. Die Referenz-Detektoren 4A, 4B und 4C dienen dann gemeinsam als Drehrichtungs-Detektor, so daß in dieser Ausführungsform ein separater Drehrichtungs-Detektor 9 nicht erforderlich ist.

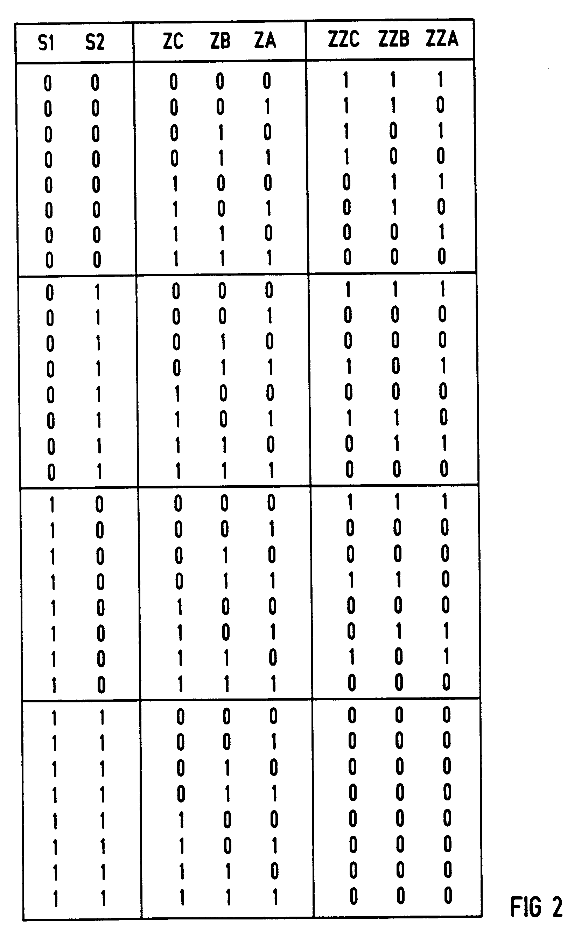

Gemäß Figur 2 ist die im Festwertspeicher programmierte Tabelle in einer vorteilhaften Ausführungsform über die Steuersignale S1 und S2 auf vier unterschiedliche Betriebszustände ausgelegt. Der Zustand S1 = S2 = 0 entspricht dabei einer Einphasenzündung, d.h. jedes Referenzsignal XA, XB und XC triggert jeweils nur das Zündsignal für die eigene Phase. Der Zustand S1 = 0 und S2 = 1 entspricht einer Doppelphasenzündung für den Drehsinn ABC (Rechtsdrehsinn) und der Zustand S1 = 1 und S2 = 0 entspricht einer Doppelphasenzündung für den Drehsinn CBA. Dabei ist unter Doppelphasenzündung zu verstehen, daß jeweils zwei Phasen mit gleichzeitig getriggerten sekundären Zündsignalen gezündet werden. Das Referenzsignal einer Phase, beispielsweise der Phase A, löst über das daraus abgeleitete primäre Zündsignal ZA = 0 (active low) beispielsweise entsprechend Zeile 15 der Tabelle sowohl ein sekundäres Zündsignal ZZA = 1 (active high) für die Phase A als auch ein sekundäres Zündsignal ZZB = 1 für die Phase B aus, wenn die Steuersignale S1 und S2 das Wertepaar (0, 1) annehmen, das den Status Vorwärtsrichtung und Doppelphasenzündung induziert. Der Tabelle ist zu entnehmen, daß der Zustand S1 = S2 = 1 in keinem Fall zu einem sekundären Zündsignal führt. Die Steuersignale S1 und S2 werden von der Steuereinrichtung 14 (Figur 1) dann auf 1 gesetzt (inactive high), wenn durch vorangegangene Messungen eine fehlerhafte Betriebsbedingung des Motors, beispielsweise ein Kurzschluß in einer Motorwindung ermittelt wurde, die ein Einschalten des Motors verbietet.

Der Tabelle ist weiterhin zu entnehmen, daß darüber hinaus eine Vielzahl von Zuständen am Steuereingang des PROM auch dann nicht zur Zündung der Halbleiter-Ventile führen, wenn die Steuersignale S1 und S2 einen an sich erlaubten Betriebszustand signalisieren. Eine solche Situation ist beispielsweise in Zeile 10 gegeben, wo zwar mit ZC = 0 und ZB = 0 für zwei Phasen gleichzeitig primäre Zündsignale aus den Referenzsignalen XC bzw. XB abgeleitet worden sind, jedoch kein sekundäres Zündsignal gesetzt wird. Mit diesem Betriebszustand wird auf eine Störung reagiert, die durch das Schalten von induktiven Lasten hervorgerufen werden kann. Durch das Schalten einer induktiven Last beispielseise in der Phase A kann auf den Ausgang 8A oder 8B des Referenz-Detektors 6B bzw. 6C der räumlich benachbarten Phase B oder C ein Störimpuls gelangen, der kurzfristig ein fehlerhaftes Referenzsignal XB bzw. XC erzeugt. Diese Störimpulse würden dann nach einer vorgegebenen Zeitverzögerung ebenfalls primäre Zündsignale ZB bzw. ZC erzeugen, die zu unerwünschten fehlerhaften Betriebszuständen führen würden. Über die im Festwertspeicher 16 realisierten logischen Verknüpfungen ist dann gewährleistet, daß stets dann, wenn für zwei Phasen gleichzeitige primäre Zündsignale anstehen, eine Zündung unterbleibt.

Der Tabelle ist beispielsweise in Zeile 9 ein weiterer Betriebszustand zu entnehmen, in dem alle drei Steuerleitungen 141, 142 und 143 gleichzeitig auf Null gesetzt sind (ZA = ZB = ZC = 0). In diesem Falle werden alle drei Phasen gleichzeitig gezündet (ZZA = ZZB = ZZC = 1). Dieser Betriebszustand wird eingenommen, wenn von der Steuereinrichtung alle drei Steuerleitungen 141, 142 und 143 dauernd auf Null gesetzt werden, um eine Dauerzündung aller drei Phasen zu ermöglichen. Durch diese Betriebsart wird gewährleistet, daß stets die volle Netzspannung am Motor 2 zur Verfügung steht. Bedingt durch den Zeitbedarf der innerhalb des Mikroprozessors der Steuereinrichtung 14 ablaufenden Befehle kann eine Zeitverzögerung DT = 0 praktisch nicht erreicht werden. Die durch die Mikroprozessorsteuerung praktischerreichbare minimale Zeitverzögerung beträgt in der verwendeten Ausführungsform etwa 280 µs. Dies entspricht bei 50 Hz einem Phasenwinkel von 5°. Um einen Betriebszustand zu ermöglichen, bei dem die volle Netzspannung an die Last gelangt, ist deshalb innerhalb der Steuereinrichtung 14 vorgesehen für Zeitverzögerungen kleiner als etwa 280 µs die Steuerleitungen 141 bis 143 stets aktiv Null zu setzen und somit eine Dauerzündung der Halbleiter-Ventile herbeizuführen. Diese Betriebsart erfordert jedoch optoelektronische Zündverstärker, die für eine Permanentzündung ausgelegt sind.

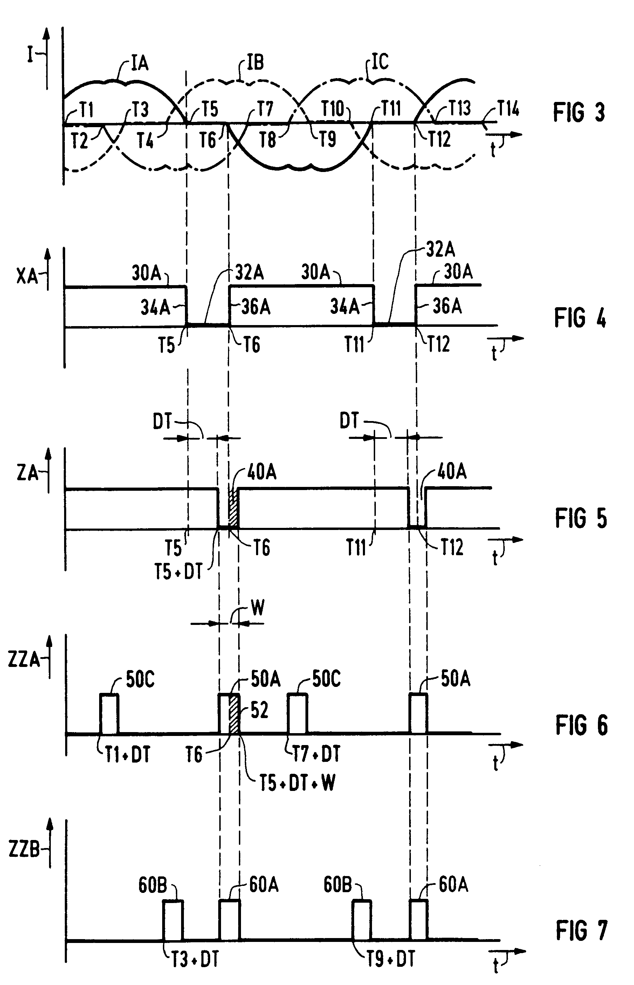

Gemäß Figur 3 fließen in den Phasen A, B und C jeweils Ströme IA, IB bzw. IC, die in der Figur mittels einer durchgezogenen, einer gestrichelten bzw. einer strichpunktierten Linie dargestellt sind. Beim Erreichen des Stromnulldurchgangs zu den Zeitpunkten T5 und T11 des in der Phase A fließenden Stromes IA löscht das in dieser Phase angeordnete Halbleiter-Ventil bis zum erneuten Wiederzünden zu den Zeitpunkten T6 und T12. Entsprechend werden IB und IC zu den Zeitpunkten T3 und T9 bzw. T1, T7 und T13 gleich Null und zu den Zeitpunkten T4 und T10 bzw. T2, T8 und T14 erneut gezündet. Der Referenz-Detektor der Phase A generiert ein Referenzsignal XA, das entsprechend Figur 4 zwei Signalpegel 30A und 32A hat, die im wesentlichen zu dem lëitenden bzw. nicht-leitenden Zustand des Halbleiter-Ventils korrespondieren. Diese Signalpegel 30A und 32A sind durch abfallende und ansteigende Flanken 34A bzw. 36A voneinander getrennt. Dabei ist durch die abfallenden Flanken 34A jeweils der Zeitpunkt T5 bzw. T11 des Stromnulldurchganges und durch die ansteigenden Flanken 36A jeweils der Zeitpunkt T6 bzw. T12 des Wiederzündens definiert. In der Steuereinheit 14 (Figur 1) wird jeweils durch die abfallende Flanke 34A des Stromnulldurchgangssignals XA ein Zähler in Gang gesetzt, dessen Zählerinhalte von der Steuereinrichtung 14 ausgelesen werden. Die Steuereinrichtung 14 erzeugt dann nach Erreichen eines vorgegebenen Zählerinhalts, entsprechend einer zugehörigen Zeitverschiebung DT, zu den Zeitpunkten T5 + DT und T11 + DT primäre Zündsignale ZA, die in der Figur 5 durch das Bezugszeichen 40A gekennzeichnet sind. Die primären Zündsignale ZA werden an den Steuereingang 161 des Festwertspeichers 16 (Figur 1) angelegt und erzeugen über dessen Speicherinhalt an den Datenausgängen 16A und 16B die in den Figuren 6 und 7 mit den Bezugszeichen 50A und 60A versehenen sekundären Zündsignalen ZZA bzw. ZZB. Bedingt durch die Stromnulldurchgänge des in den Phasen B und C jeweils fließenden Stromes IB bzw. IC zu den Zeitgunkten T3 und T9 bzw. T1, T7 und T13 werden aus den zugehörigen Referenzsignalen XB bzw. XC über die Steuereinrichtung 14 und den Festwertspeicher 16 weitere sekundäre Zündsignale ZZA und ZZB erzeugt, die in den Figuren 6 und 7 jeweils durch die Bezugszeichen 50C bzw. 60B gekennzeichnet sind.

Den Figuren 3 bis 7 ist weiterhin zu entnehmen, daß beispielsweise die mit 50C bezeichneten sekundären Zündsignale ZZA jeweils zu einem Zeitpunkt T1+DT bzw. T7+DT erfolgen, in dem die Phase A leitend ist. Diese sekundären Zündsignale sind somit überflüssig. Außerdem ist den Figuren zu entnehmen, daß eine Zündung auch dann noch erfolgt, wenn der Strom nach den Zeitpunkten T6 und T12 bereits von neuem fließt. Dieser Bereich ist durch das schraffierte Gebiet 52 in Figur 6 veranschaulicht. Die zeitliche Breite dieses Gebietes ist unter anderem gegeben durch die zeitliche Breite W der sekundären Zündsignale ZZA. Diese zeitliche Breite W entspricht im Ausführungsbeispiel der Figuren 3 bis 7 jeweils der Zeitdauer der primären Zündsignale ZA, ZB und ZC und muß groß genug sein, um zu gewährleisten, daß die sekundären Zündsignale ZZA, ZZB und ZZC wenigstens bis zum Erreichen des für die verwendeten Halbleiter-Ventile 4A, 4B bzw. 4C erforderlichen Haltestromes im gezündeten Stromkreis aufrechterhalten werden. Um auch induktive Lasten sicher schalten zu können, hat sich eine zeitliche Breite W der primären Zündsignale ZA, ZB und ZC von etwa 500 µs bis 800 µs als vorteilhaft erwiesen. Bei Verwendung eines Zündtrafos als Zündverstärker ist aber eine über die zum Zünden erforderliche Zeitdauer hinausgehende Länge der sekundären Zündsignale ZZA, ZZB und ZZC nicht erwünscht.

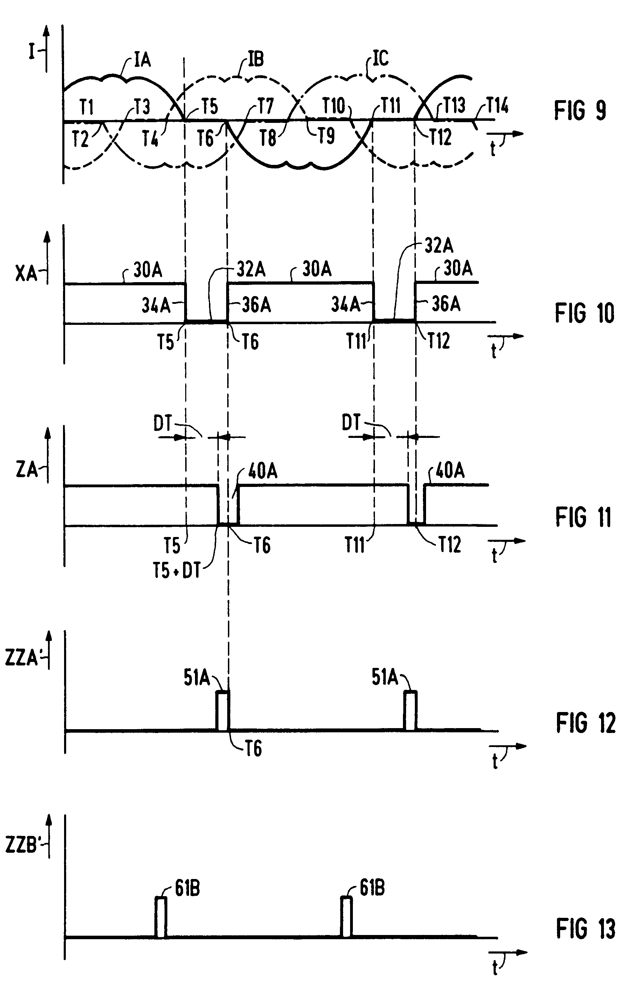

Gemäß Figur 8 ist deshalb bei einer besonders vorteilhaften Ausführungsform ein Festwertspeicher 17 vorgesehen, der neben Steuereingängen 171 bis 175 für die primären Zündsignale ZA, ZB bzw. ZC und die. Steuersignale S1 und S2 noch über drei weitere Steuereingänge 176 bis 178 für die Referenzsignale XA, XB und XC verfügt. Der Festwertspeicher 17 ist mit Datenausgängen 17A, 17B und 17C, an denen sekundäre Zündsignale ZZA′, ZZB′ bzw. ZZC′ anstehen, die über eine im Speicherinhalt des Festwertspeichers 17 gespeicherte Tabelle zusätzlich von den Referenzsignalen XA, XB und XC abhängen. Als logische Verknüpfung ist dabei innerhalb des Festwertspeichers die Bedingung gespeichert, daß die sekundären Zündsignale ZZA′, ZZB′ und ZZC′ jeweils nur dann von Null verschieden (active high) sind, wenn zugleich die Referenzsignale XA, XB bzw. XC durch ihren Zustand, beispielsweise Null (active low), anzeigen, daß in der betreffenden Phase kein Strom fließt.

Den zugehörigen zeitlichen Diagrammen gemäß Figuren 9 bis 13 ist dann zu entnehmen, daß die vorstehend genannte Bedingung, nämlich daß sekundäre Zündsignale ZZA′, ZZB′ und ZZC′ für die betreffenden Phasen A, B bzw. C nur dann erzeugt werden, wenn in diesen Phasen A, B bzw. C kein Strom fließt, bewirkt, daß für die in den Figuren veranschaulichte zeitliche Verzögerung DT, die etwa einem Phasenwinkel von 40° entspricht, eine Doppelphasenzündung nicht erfolgt. Dies hat gemäß dem Beispiel der Figuren 12 und 13 zur Folge, daß den mit 51A bezeichneten sekundären Zündsignalen ZZA′ für die Phase A keine sekundären Zündsignale ZZB′ zugeordnet sind und daß die mit 61B bezeichneten sekundären Zündsignale ZZB′ nur von den Stromnulldurchgängen in der Phase B verursacht sind. Eine von Phase A initialisierte Doppelphasenzündung für die Phase B würde unter diesen Bedingungen nur dann auftreten, wenn in der Phase B zu den Zeitpunkten T5 + DT und T11 + DT kein Strom fließen würde. Durch die im Festwertspeicher 17 realisierte logische Verknüpfung mit dem Referenzsignal XA wird außerdem bewirkt, daß dessen Anstiegsflanken 36A die in Figur 12 dargestellten und mit dem Bezugszeichen 51A versehenen sekundären Zündsignale ZZA′ zeitlich begrenzen und somit die Länge der sekundären Zündsignale auf eine zum Zünden erforderliche Zeitdauer beschränken. Die Begrenzung dieser Zeitdauer ist so zu wählen, daß im gezündeten Stromkreis der Haltestrom des Halbleiter-Ventiles sicher erreicht wird. Dies kann dadurch erreicht werden, daß der Schwellwert für die in den Referenzdetektoren jeweils angeordneten Komparatoren ausreichend groß, beispielsweise etwa 10 V, gesetzt wird. Dadurch ist sichergestellt, daß bei einer logischen Verknüpfung der Referenzsignale mit den zugehörigen Zündsignalen ausreichend lange sekundäre Zündsignale entstehen.

Bei der Ausführungsform gemäß Figur 8 tritt somit eine Doppelphasenzündung erst dann ein, wenn der Zündwinkel einen Wert von 60° überschreitet, da erst unter diesen Bedingungen die Situation auftreten kann, daß alle drei Phasen gleichzeitig nicht stromführend sind.

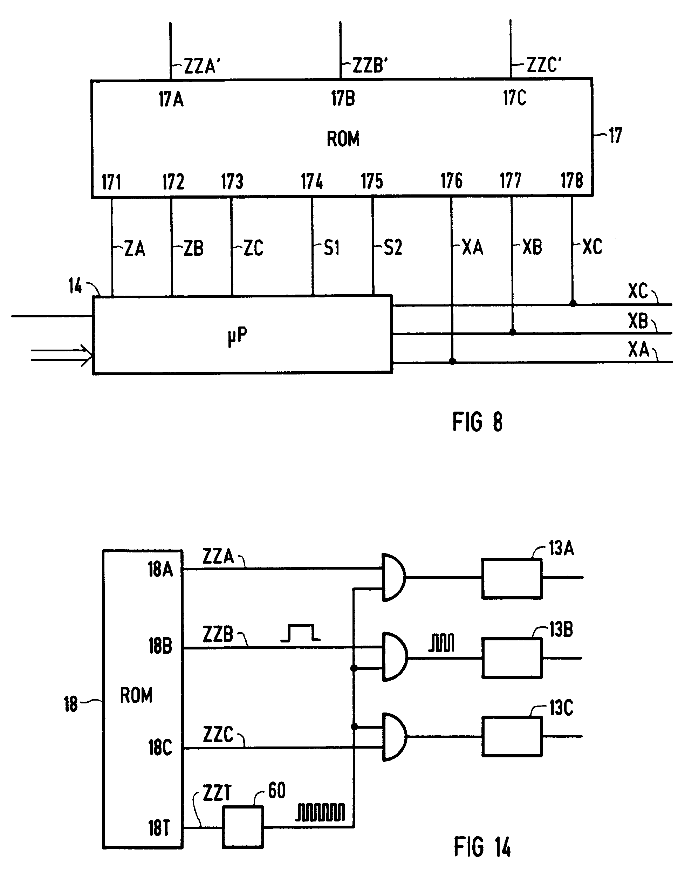

In einer bevorzugten Ausführungsform gemäß Figur 14 ist bei der Verwendung von Zündtransformatoren 13A, 13B und 13C als Zündverstärker ein Festwertspeicher 18 mit einem zusätzlichen Datenausgang 18T für einen Oszillator 60 vorgesehen, der jeweils über UND-Glieder 22A, 22B bzw. 22C mit den Zündtransformatoren 13A, 13B und 13C verbunden ist. Dieser Datenausgang 18T stellt ein Startsignal ZZT für den Oszillator 60 zur Verfügung, das stets dann gleich 1 gesetzt wird, wenn ein sekundäres Zündsignal ZZA oder ZZB oder ZZC an den Datenausgängen 18A, 18B bzw. 18C ansteht. Der Oszillator 60 wird dann gestartet und erzeugt über eine UND-Verknüpfung mit den sekundären Zündsignalen ZZA, ZZB und ZZC in deren Zeitfenster eine zeitlich begrenzte Pulssequenz, welche die Zündtransformatoren 13A, 13B und 13C vor einer Überlastung schützt, wie sie beispielsweise bei direktem Anlegen der sekundären Zündsignale ZZA, ZZB und ZZC entstehen kann.

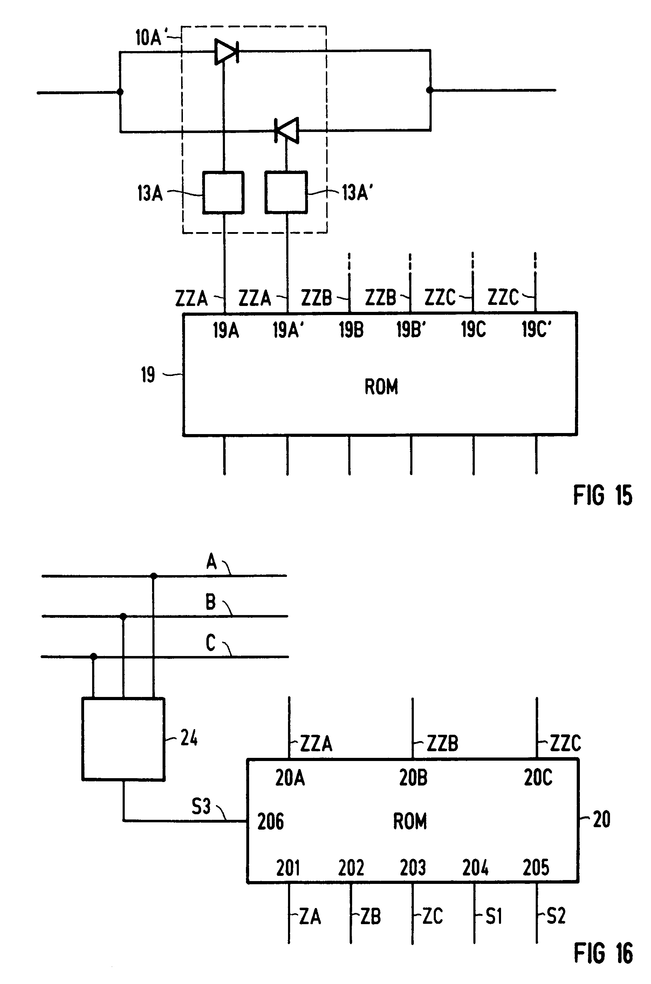

Bei der Verwendung von Thyristoren als Halbleiter-Ventile und Zündtransformatoren als Zündverstärker ist es bei hohen Schaltspannungen aus Isolationsgründen erforderlich, anstelle eines gemeinsamen Zündtransformators mit zwei galvanisch getrennten Ausgängen für die beiden Thyristoren einer Phase jeden Thyristor einen Zündtransformator zuzuordnen. Entsprechend Figur 15 ist deshalb ein Festwertspeicher 19 vorgesehen, der für jede Phase A, B und C zwei Datenausgänge 19A und 19A′, 19B und 19B′ bzw. 19C und 19C′ enthält. Auf diesen Datenausgängen werden die sekundären Zündsignale ZZA, ZZB und ZZC jeweils zweimal zur Verfügung gestellt. Dadurch können Zündeinrichtungen mit jeweils zwei Zündtransformatoren angesteuert werden, wie es im Beispiel der Figur für eine der Phase A zugeordnete Zündeinrichtung 10A mit Zündtransformatoren 13A und 13A′ veranschaulicht ist.

In einer weiteren bevorzugten Ausführungsform gemäß Figur 16 ist ein Festwertspeicher 20 mit einem zusätzlichen Steuereingang 206 vorgesehen, dem ein binäres Steuersignal S3 zugeleitet wird, das am Ausgang eines Überspannungsdetektors 24 ansteht. Treten aufgrund von Schaltvorgängen beispielsweise durch Lichtbögen induzierte hohe Überspannungen auf, so wird das Steuersignal S3 beispielsweise gleich Null gesetzt und über die im Festwertspeicher 20 programmierte Tabelle eine Zündung aller drei Halbleiter-Ventile 4A, 4B und 4C bewirkt. Dadurch werden die Halbleiter-Ventile 4A, 4B und 4C vor Zerstörung geschützt und die Überspannungen auf die Last, beispielsweise die Wicklungen eines Motors gegeben, die in der Regel für eine höhere Belastung ausgelegt sind und diese Überspannungen ohne Schaden überstehen können.

Die Ausgestaltungen der Erfindung gemäß Figuren 8, 14, 15 und 16 können dabei miteinander entsprechend den an die Steuervorrichtung gestellten Anforderungen kombiniert werden.

## Patentansprüche

1. Vorrichtung zur Steuerung von Drehstromstellen durch Phasenanschnittsteuerung von Halbleiter-Ventilen (4A, 4B und 4C) mit den Merkmalen:
a) Wenigstens einer Phase (A, B oder C) ist ein Referenz-Detektor (8A, 8B bzw. 8C) zum Ableiten eines Referenzsignales (XA, XB bzw. XC) aus einer Kenngröße des zeitlichen Verlaufes des Stromes (IA, IB bzw. IC) zugeordnet,
b) der Ausgang (8A, 8B bzw. 8C) des Referenz-Detektors (6A, 6B oder 6C) ist mit einer Steuereinrichtung (14) zur Erzeugung von jeweils aus dem Referenzsignal (XA, XB oder XC) abgeleiteten, entsprechend einem von der Steuereinrichtung (14) vorgegebenen Zündwinkel verzögerten primären Zündsignalen (ZA, ZB und ZC) verbunden, die an voneinander getrennten und jeweils einer Phase (A, B bzw. C) zugeordneten Steuerausgängen (141, 142 bzw. 143) anstehen,
c) dieser Steuereinrichtung (14) ist ein Festwertspeicher (16) zum Erzeugen von sekundären Zündsignalen (ZZA, ZZB und ZZC) zugeordnet,
d) die Steuerausgänge (141, 142 und 143) sind jeweils mit einem Steuereingang (161, 162 bzw. 163) des Festwertspeichers (16) verbunden und
e) jeder Phase (A, B und C) ist wenigstens ein Datenausgang (16A, 16B bzw. 16C) des Festwertspeichers (16) zugeordnet, an dem die sekundären Zündsignale (ZZA, ZZB und ZZC) anstehen.

2. Vorrichtung nach Anspruch 1, **dadurch** **gekennzeichnet**, daß jeder Phase (A, B und C) ein Referenz-Detektor (6A, 6B bzw. 6C) zugeordnet ist.

3. Vorrichtung nach Anspruch 1 oder Anspruch 2, **dadurch gekennzeichnet,** daß als Kenngröße der Nulldurchgang des Stromes (IA, IB, IC) vorgesehen ist.

4. Vorrichtung nach einem der Ansprüche 1 bis 3, **dadurch gekennzeichnet,** daß die Datenausgänge (16A, 16B und 16C) des Festwertspeichers (16) jeweils über einen Zündverstärker (12A, 12B bzw. 12C) mit den Halbleiterventilen (4A, 4B und 4C) verbunden sind.

5. Vorrichtung nach einem der Ansprüche 1 bis 4, **dadurch gekennzeichnet,** daß der Festwertspeicher (16) mit weiteren Steuereingängen (164 und 165) für binäre Steuersignale (S1 bzw. S2) vorgesehen ist, die mit Steuerausgängen (144 und 145) der Steuereinrichtung (14) verbunden sind und mit denen Betriebsarten der Steuerung sowie der Drehsinn des Drehstroms angezeigt werden.

6. Vorrichtung nach einem der Ansprüche 3 bis 5, **dadurch gekennzeichnet,** daß der Festwertspeicher (17) mit drei weiteren Steuereingängen (176, 177 und 178) vorgesehen ist, die jeweils mit dem Ausgang (8A, 8B bzw. 8C) eines Referenz-Detektors (6A, 6B bzw. 6C) verbunden sind.

7. Vorrichtung nach einem der Ansprüche 1 bis 6, **dadurch gekennzeichnet,** daß der Festwertspeicher (18) mit einem weiteren Datenausgang (18T) zum Bereitstellen eines Startsignales (ZZT) für einen Oszillator (60) vorgesehen ist.

8. Vorrichtung nach Anspruch 7, **dadurch gekennzeichnet,** daß der Festwertspeicher (19) vorgesehen ist, bei dem jeder Phase (A, B und C) zwei Datenausgänge (19A und 19A′, 19B und 19B′ bzw. 19C und 19C′) zugeordnet sind.

9. Vorrichtung nach einem der Ansprüche 1 bis 7, **dadurch gekennzeichnet,** daß der Festwertspeicher (20) mit einem Steuereingang (206) für ein am Ausgang eines Überspannungs-Detektors (24) anstehendes Steuersignal (S3) vorgesehen ist.

## Claims

1. Apparatus for controlling three-phase controllers by means of phase control of semiconductor valves (4A, 4B and 4C) having the features:
a) associated with at least one phase (A, B or C) there is a reference detector (8A, 8B or 8C respectively) (sic) for the purpose of deriving a reference signal (XA, XB or XC respectively) from a characteristic quantity of the time characteristic of the current (IA, IB or IC respectively);
b) the output (8A, 8B or 8C respectively) of the reference detector (6A, 6B or 6C) is connected to a control device (14) for the generation of primary ignition signals (ZA, ZB and ZC) which are derived, in each case, from the reference signal (XA, XB or XC), are delayed in accordance with an ignition angle preset by the control device (14) and occur at separate control outputs (141, 142 and 143 respectively) associated, in each case, with a phase (A, B and C respectively);
c) associated with this control device (14) there is a read-only memory (16) for the generation of secondary ignition signals (ZZA, ZZB and ZZC);
d) the control outputs (141, 142 and 143) are each connected with a control input (161, 162 and 163 respectively) of the read-only memory (16); and
e) associated with each phase (A, B and C) there is at least one data output (16A, 16B and 16C respectively) of the read-only memory (16) at which the secondary ignition signals (ZZA, ZZB and ZZC) occur.

2. Apparatus according to claim 1, characterised in that associated with each phase (A, B and C) there is a reference detector (6A, 6B and 6C respectively).

3. Apparatus according to claim 1 or claim 2, characterised in that the zero crossing of the current (IA, IB, IC) is provided as a characteristic quantity.

4. Apparatus according to one of the claims 1 to 3, characterised in that the data outputs (16A, 16B and 16C) of the read-only memory (16) are connected, in each case, with the semiconductor valves (4A, 4B and 4C) by way of an ignition amplifier (12A, 12B and 12C respectively).

5. Apparatus according to one of the claims 1 to 4, characterised in that the read-only memory (16) is provided, having further control inputs (164 and 165) for binary control signals (S1 and S2 respectively), which inputs are connected with control outputs (144 and 145) of the control device (14) and with which operating modes of the control and also the direction of rotation of the three-phase current are indicated.

6. Apparatus according to one of the claims 3 to 5, characterised in that the read-only memory (17) is provided, having three further control inputs (176, 177 and 178) which are connected, in each case, with the output (8A, 8B and 8C respectively) of a reference detector (6A, 6B and 6C respectively).

7. Apparatus according to one of the claims 1 to 6, characterised in that the read-only memory (18) is provided, having a further data output (18T) for the supply of a starting signal (ZZT) for an oscillator (60).

8. Apparatus according to claim 7, characterised in that the read-only memory (19) is provided, in which memory two data outputs (19A and 19A′, 19B and 19B′, and 19C and 19C′ respectively) are associated with each phase (A, B and C).

9. Apparatus according to one of the claims 1 to 7, characterised in that the read-only memory (20) is provided, having a control input (206) for a control signal (S3) which occurs at the output of an overvoltage detector (24).

## Revendications

1. Dispositif pour la commande de régulateurs à courant triphasé par commande à découpage de phase réalisée par des valves à semiconducteurs (4A,4B et 4C) présentant les caractéristiques suivantes :
a) à au moins une phase (A,B ou C) est associé un détecteur de référence (8A,8B ou 8C) servant à dériver un signal de référence (XA,XB ou XC) à partir d'une grandeur caractéristique de la variation dans le temps du courant (IA,IB ou IC) ,
b) la sortie (8A,8B,8C) du détecteur de référence (6A,6B ou 6C) est raccordée à un dispositif de commande (14) servant à produire des signaux d'amorçage primaires (ZA, ZB et ZC), qui sont dérivés respectivement du signal de référence (XA,XB ou XC), qui sont retardés en fonction d'un angle d'amorçage prédéterminé par le dispositif de commande (14) et qui apparaissent à des sorties de commande (141,142 ou 143), qui sont séparées les unes des autres et sont associées aux phases respectives (A, B ou C),
c) une mémoire morte (16) servant à produire des signaux d'amorçage secondaires (ZZA,ZZB et ZZC) est associée à ce dispositif de commande (14),
d) les sorties de commande (141,142 et 143) sont raccordées aux entrées de commande respectives (161,162 et 163) de la mémoire morte (16), et
e) à chaque phase (A,B et C) est associée au moins une sortie de données (16A, 16B ou 16C) de la mémoire morte (16), sur laquelle apparaissent les signaux d'amorçage secondaires (ZZA,ZZB et ZZC).

2. Dispositif suivant la revendication 1, caractérisé par le fait qu'à chaque phase (A,B et C) est associé un détecteur de référence (6A,6B,6C).

3. Dispositif suivant la revendication 1 ou 2, caractérisé par le fait qu'il est prévu comme grandeur caractéristique l'annulation du courant (IA,IB,IC).

4. Dispositif suivant l'une des revendications 1 à 3, caractérisé par le fait que les sorties de données (16A,16B et 16C) de la mémoire morte sont raccordées respectivement, par l'intermédiaire d'un amplificateur d'amorçage (12A,12B ou 12C), aux valves à semiconducteurs (4A,4B et 4C).

5. Dispositif suivant l'une des revendications 1 à 4, caractérisé par le fait que la mémoire morte (16) est pourvue d'autres entrées de commande (164 et 165) pour des signaux de commande binaires (S1 ou S2), qui sont raccordés à des sorties de commande (144 et 145) du dispositif de commande (14) et au moyen desquels sont affichés des types de fonctionnement de l'unité de commande ainsi que le sens de rotation du courant triphasé.

6. Dispositif suivant l'une des revendications 3 à 5, caractérisé par le fait que la mémoire morte (17) est pourvue de trois autres entrées de commande (176,177 et 178), qui sont raccordées aux sorties respectives (8A,8B et 8C) de détecteurs de référence (6A,6B et 6C).

7. Dispositif suivant l'une des revendications 1 à 6, caractérisé par le fait que la mémoire morte (18) est pourvue d'une autre sortie de données (18A) servant à préparer un signal de démarrage (ZZT) pour un oscillateur (60).

8. Dispositif suivant la revendication 7, caractérisé par le fait que dans la mémoire morte prévue (19), à chaque phase (A,B et C) sont associées deux sorties de données (19A et 19A′, 19B et 19B′ ou 19C et 19C′).

9. Dispositif suivant l'une des revendications 1 à 7, caractérisé par le fait que la mémoire morte (20) est pourvue d'une entrée de commande (206) pour un signal de commande (S3) qui apparaît à la sortie du détecteur de surtension (24).
